# EUROPEAN PATENT APPLICATION

(11) **EP 1 191 243 A2**
(43) Date of publication of application: **27.03.2002**
(21) Application number: 01118168.2
(22) Date of filing: 26.07.2001
(51) Int. Cl.: F16C 32/04, F16C 39/06

(54) **Magnetic bearing apparatus of quick response**

(30) Priority: 12.09.2000 JP 2000276845
(71) Applicant: EBARA CORPORATION, Ohta-ku, Tokyo (JP)
(72) Inventor: Shinozaki, Hiroyuki, Kamakura-shi, Kanagawa-ken (JP)
(74) Representative: Wagner, Karl H., Dipl.-Ing.

(57) **Abstract**

A magnetic bearing apparatus having a high speed-of-response and of a low cost is provided. The apparatus comprises a power amplifier for supplying a control current to a coil of an electromagnet of a control-type magnetic bearing and a non-linear component positioned in the rear of a stage where a control input signal S1 of the power amplifier and a current feedback signal S2 is added.

## Description

The present invention relates to a magnetic bearing apparatus which is requested to have a quick response for high-speed rotary machines. More specifically, the present invention relates to a magnetic bearing apparatus for use in semiconductor device manufacturing apparatuses, having an advantage of being capable of supporting an object at low speed without any physical contact and having a solid yoke structure for reducing discharge gas from a magnetic circuit and improving anticorrosiveness, for example, a magnetic bearing apparatus suitable for a CVD (chemical vapor deposition) apparatus, a substrate rotating apparatus for RTP (rapid thermal processing) and a gas circulation fan.

The entire disclosure of Japanese Patent Application No. 2000-276845 filed on September 12, 2000,including the specification, claims, drawings and abstract, is incorporated herein by reference in its entirety.

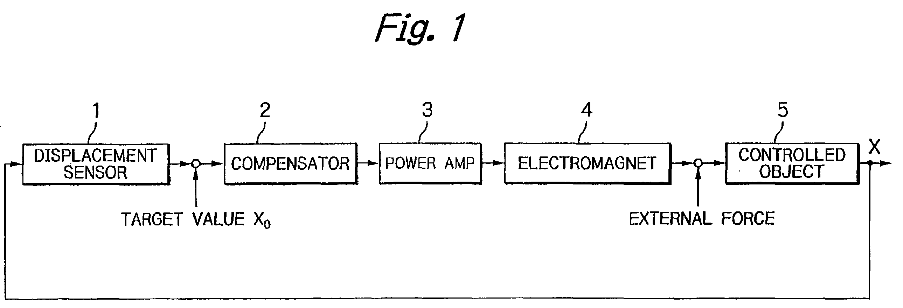

In the field of a semiconductor device manufacturing apparatus, a turbo molecular pump is well known among apparatuses in which magnetic bearing apparatuses are in particular widespread. Magnetic bearing apparatuses employed in almost all turbo molecular pumps are called as a control-type magnetic bearing apparatus. Fig. 1 shows a structural example of such a control-type magnetic bearing apparatus in one degree of freedom. As shown in this figure, the magnetic bearing apparatus comprises a displacement sensor 1, a compensating device 2, a power amplifier 3 and an electromagnet 4. Power amplifier 3 supplies a control current to a coil wound around electromagnet 4 to generate a magnetic force, which magnetically supports a controlled object 5. A displacement X made by controlled object 5 is detected by displacement sensor 1 and is compared with a target value Xo. A deviation between X and Xo is input to power amplifier 3 through compensating device 2.

A load to power amplifier 3 is electromagnet 4 and, thus, a delaying load. Power amplifier 3 drives electromagnet 4 by means of an output current which corresponds to an input signal. As a result, a relationship between the input signal and the output current indicates a delay characteristic. Usually, in order to improve such a delay characteristic, a loop is provided in order to feed back to the input of power amplifier 3 a coil current supplied to the coil of electromagnet 4.

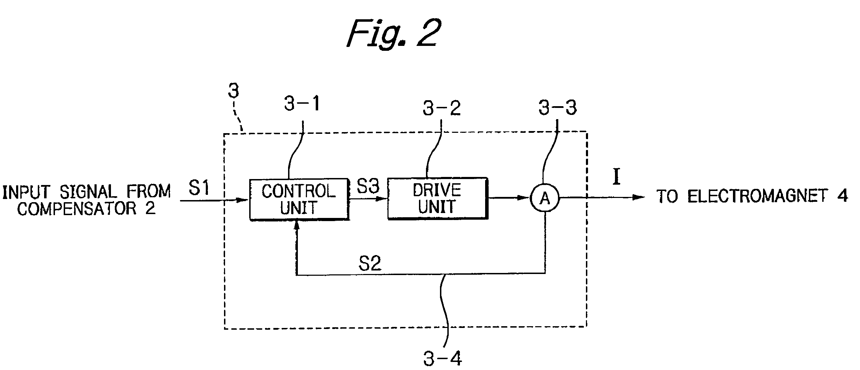

Fig. 2 shows a structural example of power amplifier 3. Power amplifier 3 comprises a control unit 3-1, a drive unit 3-2, a current detector 3-3 and a current signal feedback loop 3-4. From a view point of role, power amplifier 3 is generally divided into two parts, that is, control unit 3-1 and drive unit 3-2. Control unit 3-1 forms a signal S for controlling drive unit 3-2 on the basis of an input signal S1 received from compensating device 2 (Fig. 1) and a current feedback signal S2. Drive unit 3-2 supplies a coil current to the coil of electromagnet 4 on the basis of an output signal S3 of control unit 3-1.

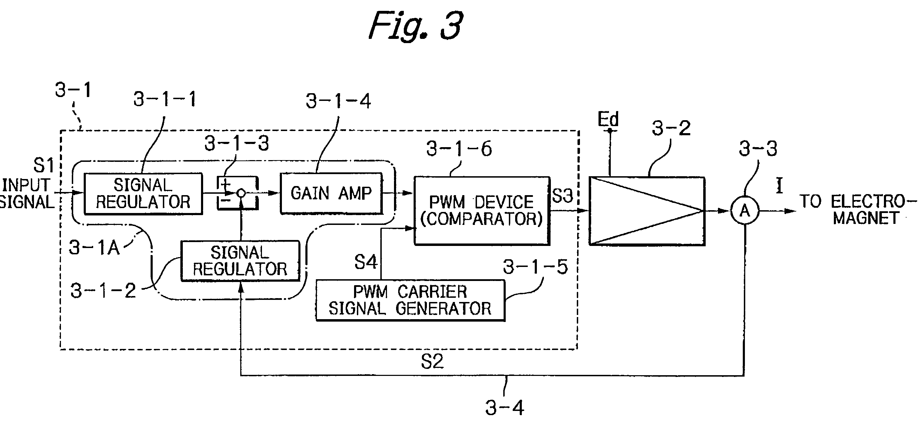

Control unit 3-1 is now explained, taking an example of a PWM (pulse width modulation) system, as shown in Fig. 3, widely employed today. Control unit 3-1 comprises signal regulators 3-3-1 and 3-1-2, a adding/subtracting device 3-1-3, a gain amplifier 3-1-4, a PWM carrier signal generator 3-1-5 and a PWM device (comparator) 3-1-6. Signal regulators 3-3-1 and 3-1-2, adding/subtracting device 3-1-3 and gain amplifier 3-1-4 form a signal synthesis and regulation unit designated generally by 3-1A. In control unit 3-1, input signal S1 and current feedback signal S2, that is, a negatively fed back coil current of electromagnet 4, are fed through signal regulators 3-1-1 and 3-1-2 to gain amplifier 3-1-4 having a relatively large gain 10 - 100. Thereafter, PWM device (comparator) 3-1-6 compares the output of gain amplifier 3-1-4 with a reference carrier signal, such as a triangle wave signal, from PWM carrier signal generator 3-1-5 and produces output signal S3 that is a pulse width modulated signal. Pulse width modulated signal S3 is fed to drive unit 3-2, thereby causing a coil current I to be supplied to the coil of electromagnet 4.

Considering now an amplification response performance (output current vs. input signal), the gain equals to one (1) [A/V] if a ratio of an amount of feedback of coil current I to input signal S1 is equal to one. The gain is in inverse proportion to how much coil current I is fed back. The speed-of-response (follow-up response) is in proportion to a ratio of an amount of feedback of coil current I to input signal S1 and in proportion to a relatively large gain of gain amplifier 3-1-4.

If an amount of feed back of coil current I and/or the gain of gain amplifier 3-1-4 are preset to a large value in order to improve a response (speed-of-response) of a magnetic bearing apparatus, a PWM carrier signal component is also amplified, resulting in an unstable operation of pulse width modulating comparator 3-1-6. Further, since a response of gain amplifier 3-1-4 is in inverse proportion to a magnitude of the gain thereof, it is practically impossible to raise the gain. In addition, if an amount of feedback of coil current I is increased, the amplification response performance (output current vs. input signal) of power amplifier 3 is reduced. Consequently, the ratio of feed back is usually set to a value less than one.

The response (speed-of-response) of gain amplifier 3-1-4 is in inverse proportion to a signal amplitude. Consequently, if coil current I delays too much from input signal S1 of power amplifier 3, a sum of (deviation between) input signal S1 and current feedback signal S2 increases. The sum is the output of adding/subtracting device 3-1-3, which equals to zero if S1=S2. If the deviation becomes large, the input amplitude of gain amplifier 3-1-4 increases and may be saturated depending to a gain magnification. Such a saturation phenomenon is also one of the causes of deterioration in response (speed-of-response).

As described above, there are a lot of problems in improving the response (speed-of-response). Increasing a driving voltage Ed of drive unit 3-2 has been adopted as a general solution. Such an increase in driving voltage Ed, however, is disadvantageous in that a high voltage is necessarily switched, resulting in unavoidable increase in electromagnetic noises.

The present invention has been proposed in view of the above-described problems and an object of the present invention is to provide a magnetic bearing apparatus of a low cost and having a quick response.

In order to achieve the object above, the present invention provides a magnetic bearing apparatus having a power amplifier for supplying a control current to a coil of an electromagnet of a control-type magnetic bearing, said apparatus characterized in that a non-linear component is provided in the rear of a stage where a control input signal of the power amplifier and a current feedback signal are added.

The non-linear component may preferably be a comparator circuit.

Since the non-linear component is disposed in the rear of the stage where the control input signal and the current feedback signal are added, it is possible to improve a speed-of-response of the power amplifier. In particular, if a comparator capable of making a comparison with a reference potential to produce an output having a constant value of logical high or low is used as the non-linear component, it is possible to improve the speed-of-response of the power amplifier. This is because the comparator is equivalent to an amplifier having an approximately infinite gain magnification with respect to an input signal in the vicinity of the reference voltage.

A magnetic bearing apparatus according to the present invention may further have a remover provided in the rear of the non-linear component for removing a displacement sensor carrier frequency signal band.

As described above, since the remover is provided at an output side of the non-linear component for removing a displacement sensor carrier frequency signal component, a displacement sensor carrier frequency signal component can be removed from higher order harmonic components contained in a rectangular output signal of the non-linear component.

A magnetic bearing apparatus according to the present invention may further have a remover provided in front of the non-linear component for removing a pulse width modulation (PWM) power amplifier carrier frequency signal band.

A detection signal obtained from a coil current of the electromagnet contains more or less a PWM carrier frequency signal component. Such a signal component should be removed before feedback, but may not be removed sufficiently in some cases. By providing the remover in front of the non-linear component for removing the PWM carrier frequency signal component, the PWM carrier frequency signal component can be removed.

A magnetic bearing apparatus according to the present invention may provide a first remover in front of the non-linear component for removing a pulse width modulation (PWM) power amplifier carrier frequency signal band and a second remover subsequently to the non-linear component for removing a displacement sensor carrier frequency signal band.

As described above, since the first remover is provided in front of the non-linear component for removing the pulse width modulation (PWM) power amplifier carrier frequency signal band and a second remover is provided in the rear of the non-linear component for removing a displacement sensor carrier frequency signal band, the present invention can exhibit combined advantages brought about when the removers are positioned in front of and in the rear of the non-linear component, respectively.

The invention will be described in detail in the following description of preferred embodiments with reference to the following figures wherein :
Fig. 1 is a block diagram showing a structural example of a magnetic bearing apparatus in one degree of freedom;
Fig. 2 is a block diagram showing a structural example of a power amplifier shown in Fig. 1;
Fig. 3 is a block diagram showing a structural example of a control unit shown in Fig. 2;
Fig. 4 is a block diagram showing the structure of a power amplifier of a magnetic bearing apparatus according to the invention;
Figs. 5(a) and 5(b) show examples of a non-linear component of a magnetic bearing apparatus according to the invention and Fig. 5(c) is a graph showing an input-output characteristic of the non-linear component;
Fig. 6 shows an example of components within the power amplifier of a magnetic bearing apparatus according to the invention;
Fig. 7 is a block diagram showing how to remove a displacement sensor carrier frequency signal component of a magnetic bearing apparatus according to the invention;
Fig. 8 is a block diagram showing how to remove a displacement sensor carrier frequency signal component and a PWM frequency signal component in a magnetic bearing apparatus according to the invention;
Figs. 9(a) to 9(c) are used to explain a remover used for a magnetic bearing apparatus according to the invention;
Figs. 10(a) to 10(c) show structural examples of a remover used for a magnetic bearing apparatus according to the invention; and
Figs. 11(a) and 11(b) show other structural examples of a remover used for a magnetic bearing apparatus according to the invention.

In those drawings, like elements are designated by the same reference numerals and symbols.

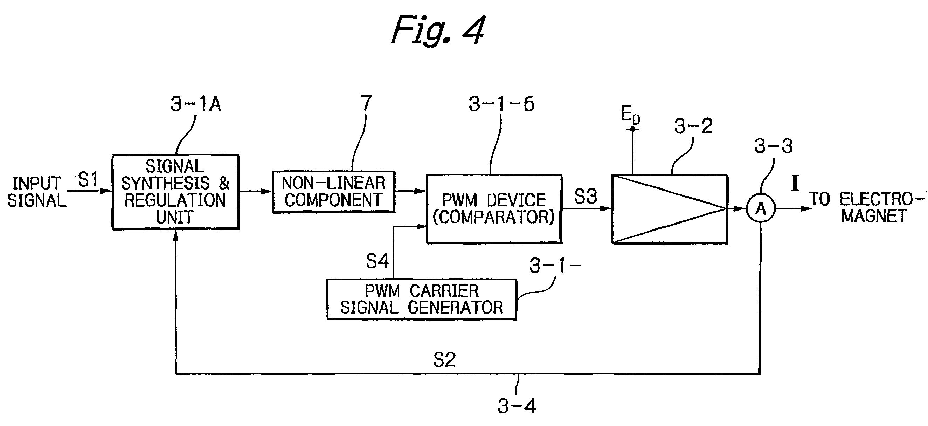

Embodiments of the present invention will hereafter be described with reference to the attached drawings. Fig. 4 shows a structural example of a power amplifier of a magnetic bearing apparatus according to the present invention. The power amplifier corresponds to power amplifier 3 shown in Fig. 1. As shown in Fig. 4, a non-linear component 7 is inserted between a signal synthesis and regulation unit 3-1A and a comparator circuit 3-1-6 in order to improve a speed-of-response of a power amplifier 3. Signal synthesis and regulation unit 3-1A has the same structure as as the one shown in Fig. 3. A comparator, for example, is used as non-linear component 7. In particular, such a comparator capable of making a comparison with a reference potential to output a constant "high" or "low" value has an excellent speed-of-response and is equivalent to an amplifier having an approximately indefinite gain magnification with respect to an input signal in the vicinity of the reference voltage, which enables the speed-of-response of the power amplifier to be improved.

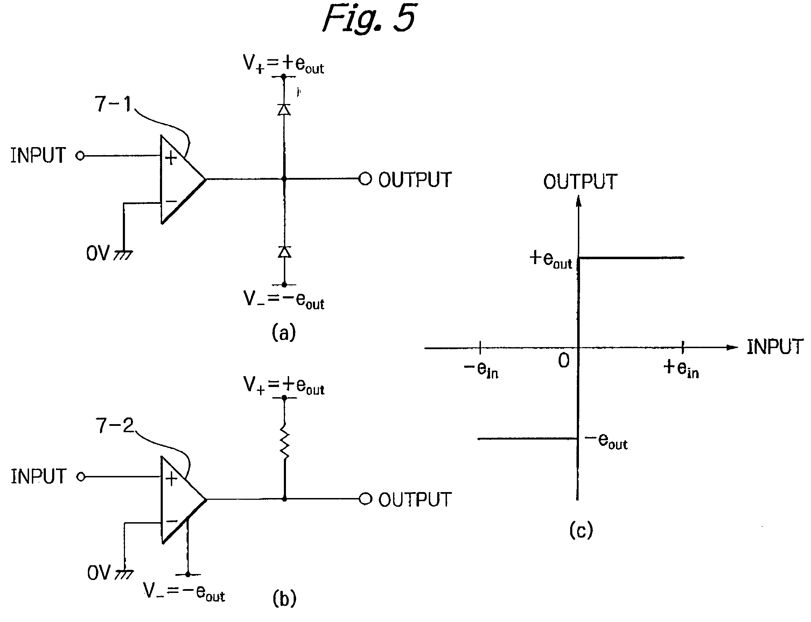

Figs. 5(a) and 5(b) show examples of non-linear component 7, Fig. 5(a) showing a case where an operational amplifier 7-1 is utilized and Fig. 5(b) showing a case where a comparator having an open-collector output is utilized. Fig. 5(c) shows an input-output characteristic of non-linear component 7 shown in Figs. 5(a) and 5(b). Non-linear component 7 is equivalent to an amplifier having an approximately indefinite gain when an input is equal to zero or in the vicinity thereof. It is noted that non-linear component 7 is not limited to the structure as shown in Figs. 5(a) and 5(b) and can easily been realized by means of digital numerical arithmetic means.

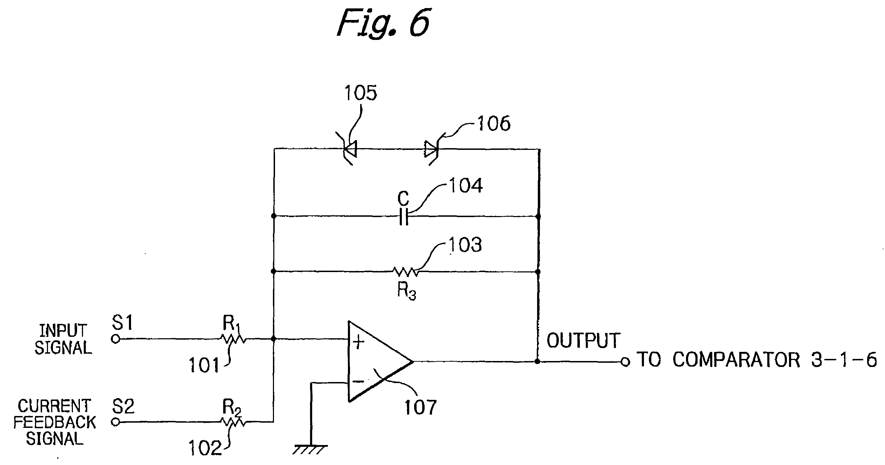

A part of signal regulator 3-1-1, a part of signal regulator 3-1-2, adding/subtracting device 3-1-3 and gain amplifier 3-1-4 in control unit 3-1 shown in Fig. 3 can be easily implemented as an analog circuit comprising an operational amplifier 107 and passive elements (resistors 101, 102 and 103, a capacitance 104 and Zener diodes 105 and 106) as shown in Fig. 6. A ratio of input signal S1 to current feedback signal S2 is interlocked to a gain magnification of gain amplifier 3-1-4, as described below. Consequently, the main purpose is to determine the ratio of input signal S1 to current feedback signal S2, and the gain magnification is preferably set to a relatively small value (1 - 10 times or around) in order to avoid internal saturation of operational amplifier 107.

In Fig. 6, the ratio of input signal S1 to current feedback signal S2 is determined by resistance values R1 and R2 of resistors 101 and 102, respectively. The gain magnification is determined by R3/R1 and R3/R2. Assume that R3 is a resistance value of resistor 103. Consequently, input signal S1 and current feedback signal S2 are in inverse proportion to resistance values R1 and R2. Capacitance 104 is provided for the purpose of avoiding internal oscillation of operational amplifier 107. Zener diodes 105 and 106 are provided for the purpose of limiting a maximum amplitude of an output voltage. The purpose of such a limiting process is to maintain the output voltage less than the amplitude of a reference carrier signal S4 fed from a PWM carrier signal generator 3-1-5.

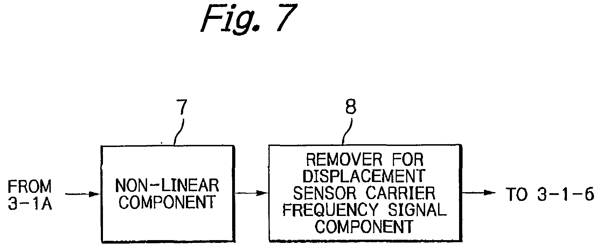

Further, as shown in Fig. 7, a remover 8 is preferably provided at an output side of non-liner component 7 for removing a displacement sensor carrier frequency signal component (Fig. 1) so as to protect displacement sensor 1 (shown in Fig. 1). The output of non-linear component 7 is a rectangular-wave signal. If the displacement sensor carrier frequency signal component is contained in higher-order harmonics of the rectangular-wave signal, the carrier frequency signal may deteriorate the function of the displacement sensor (Please refer to Japanese Patent Laid-open No. 46296/98).

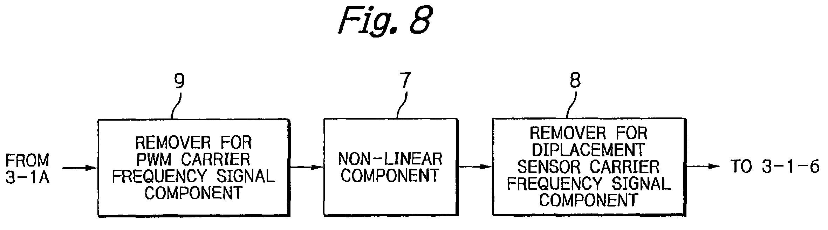

In addition, a remover 9 is preferably provided in front of non-linear component 7 for removing a PWM carrier frequency signal component, as shown in Fig. 8. An output signal of a current detector 3-3 (Fig. 4) for detecting a coil current I of electromagnet 4 contains more or less the PWM carrier frequency signal component. The contained PWM carrier frequency signal component should be removed before feedback, but it may happen that such a signal component cannot be removed sufficiently. Remover 9 for removing the PWM carrier frequency signal component is preferably positioned in front of non-liner component 7, since gain amplifier 3-1-4 in signal synthesis and regulation unit 3-1A operates to amplify a signal from adding/subtracting device 3-1-3.

In the control unit of a magnetic bearing apparatus according to the present invention, non-liner component 7 is, as shown in Fig. 4, inserted between signal synthesis and regulation unit 3-1A and comparator circuit 3-1-6 in order to improve a speed-of-response of the gain amplifier. Remover 8 is provided at an output side of non-linear component 7 for removing a displacement sensor carrier frequency signal component and remover 9 is provided in front of non-liner component for removing a PWM carrier frequency signal component. Such a structure enables the provision of a magnetic bearing apparatus having a quick response and can overcome the following problems:
1. If an amount of feedback of the coil current of electromagnet 4 and the gain of gain amplifier 3-1-4 are set to large values to enhance a speed-of-response, a PWM carrier frequency signal component contained in the coil current is also amplified, resulting in unstable operation of comparator circuit 3-1-6 for pulse modulation;
2. A gain of gain amplifier 3-1-4 cannot be a large value because a response (speed-of-response) of the gain amplifier is in inverse proportion to the gain thereof;
3. Since a response (speed-of-response) of the gain amplifier is, as described above, in inverse proportion to the gain thereof, a sum (deviation) of input signal S1 and current feedback signal S2 of coil current I becomes large if the coil current of electromagnet 4 delays too much from the input signal of the power amplifier. As a result, an input amplitude of gain amplifier 3-1-4 becomes large and the gain amplifier may saturate depending on the gain magnification, which may be one of the causes of deteriorating the response (speed-of-response); and
4. If a driving voltage Ed of drive unit 3-2 is increased to improve the response (speed-of-response), a high voltage is switched, resulting in increase in electromagnetic noises. Further, the displacement sensor is adversely affected and a position control performance is deteriorated.

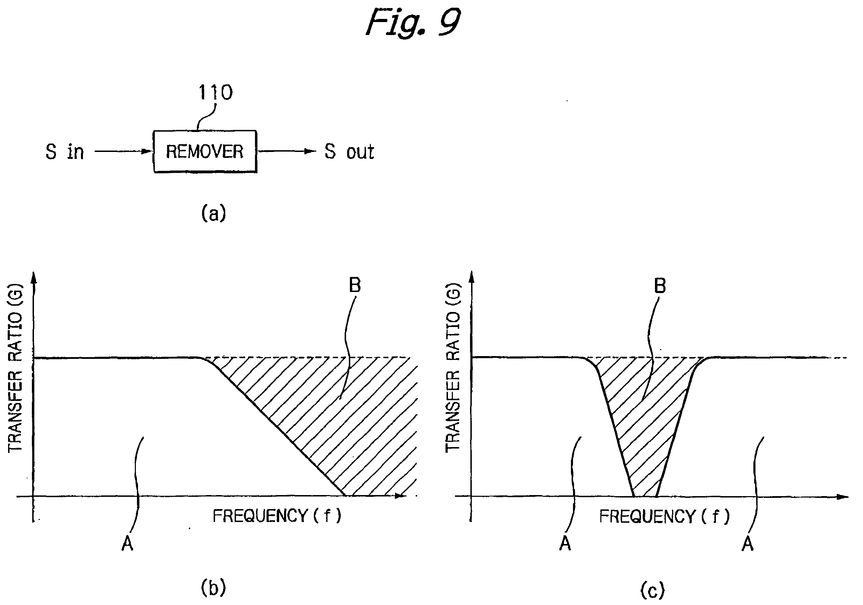

Figs. 9(a) - 9(c) are used to explain removers 8 and 9. Fig. 9(a) shows a remover 110, an input signal Sin and an output signal Sout, and Figs. 9(b) and 9(c) show relationships between a transfer ratio G=Sout/Sin of a lowpass filter (LPF) and a band-elimination filter (BEF) over frequency, respectively. In these figures, A denotes a pass region and B denotes a rejected region.

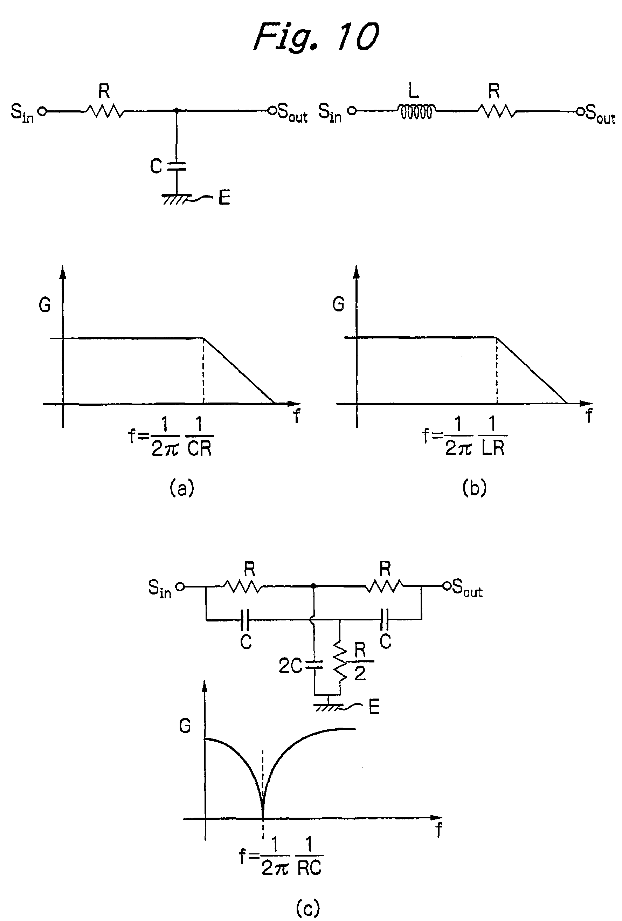

Figs. 10(a) and 10(b) show structural examples of an LPF as a passive remover and a characteristic thereof. In these figures, R denotes a resistor, C a capacitance, L an inductance, E ground (reference voltage) and f a frequency.

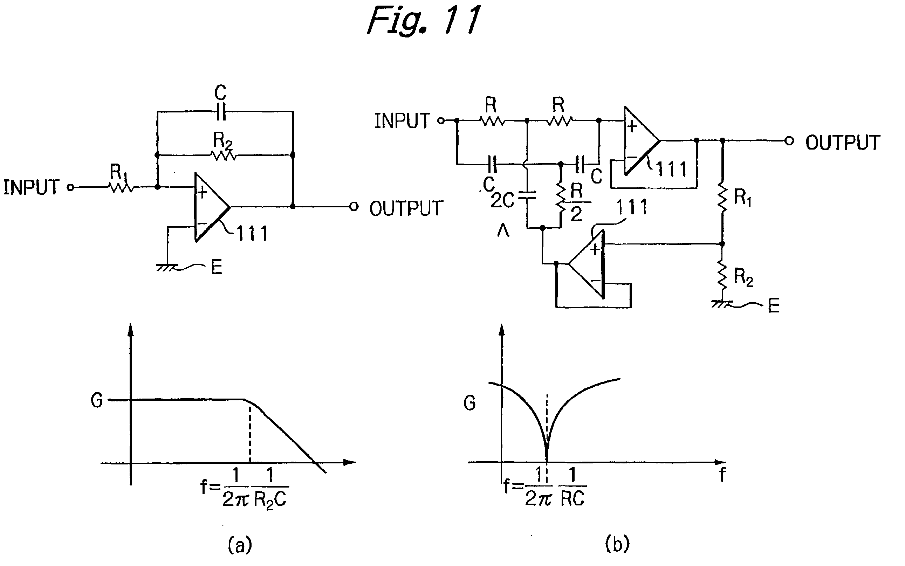

Figs. 11(a) and 11(b) show structural examples of an LPF as an active remover and a characteristic thereof. In these figures. R denotes a resistor, C a capacitance, L an inductance, E ground (reference voltage), f a frequency and 111 an operational amplifier.

As will be understood from the description made up to now, the present invention can bring about various advantages. For example,
1. Since a non-liner component is provided in the rear of a stage where a control input signal of a power amplifier and a current feedback signal are added, it is possible to improve a speed-of-response of the power amplifier. In particular, a comparator used as the non-liner component for making a comparison with a reference potential to output a "high" or "low" constant value can improve the speed-of-response of the power amplifier, because the comparator is equivalent to an amplifier having an approximately infinite gain magnification.
2. By providing a remover at an output side of the non-linear component for removing a displacement sensor carrier frequency signal band, the carrier frequency signal component within higher order harmonics contained in a triangular output signal from the non-linear component can be removed, and any deterioration in function of the displacement sensor can be avoided.
3. By providing a remover in front of the non-linear component for removing a PWM carrier frequency signal band, the carrier frequency signal component can be removed, and the operation of the comparator for pulse modulation can be stabilized.
4. By providing a first remover in front of the non-linear component for removing a PWM carrier frequency signal band and a second remover at an output side of the non-linear component for removing a displacement sensor carrier frequency signal band, the PWM carrier frequency signal component and the displacement sensor carrier frequency signal component can be removed, the operation of a comparator for pulse modulation can be stabilized, and any deterioration in function of the displacement sensor can be avoided.

The present invention has been described in detail with reference to certain embodiments of the invention, but it is clear that the present invention is limited to the disclosed embodiments. Those skilled in the art will understand that modifications and changes can be made to the present invention.

## Claims

1. A magnetic bearing apparatus having a power amplifier for supplying a control current to a coil of an electromagnet of a control-type magnetic bearing, said apparatus **characterized in that** a non-linear component is provided in the rear of a stage where a control input signal of said power amplifier and a current feedback signal are added.

2. A magnetic bearing apparatus as claimed in claim 1, **characterized in that** said non-linear component is a conparator circuit.

3. A magnetic bearing apparatus as claimed in claim 1 or 2, **characterized in that** a remover is provided at an output side of said non-linear component for removing a displacement sensor carrier frequency signal band.

4. A magnetic bearing apparatus as claimed in claim 1 or 2. **characterized in that** a remover is provided at an input side of said non-linear component for removing a pulse width modulation (PWM) power amplifier carrier frequency signal band.

5. A magnetic bearing apparatus as claimed in claim 1 or 2. **characterized in that** a first remover is provided at an input side of said non-linear component for removing a pulse width modulation (PWM) power amplifier carrier frequency signal band and that a second remover is provided at an output side of said non-linear component for removing a displacement sensor carrier frequency signal band.
